# EUROPÄISCHE PATENTSCHRIFT

(11) **EP 1 125 069 B1**
(45) Veröffentlichungstag und Bekanntmachung des Hinweises auf die Patenterteilung: **18.02.2004**
(21) Anmeldenummer: 99950619.9
(22) Anmeldetag: 05.10.1999
(51) Int. Cl.: F16F 9/42

(54) **HOCHLEISTUNGSSCHWINGUNGSDÄMPFER**
HIGH PERFORMANCE VIBRATION DAMPER
AMORTISSEUR DE VIBRATIONS A HAUTE PERFORMANCE

(30) Priorität: 27.10.1998 DE 19849429
(43) Veröffentlichungstag der Anmeldung: 22.08.2001
(73) Patentinhaber: KNORR-BREMSE Systeme für Schienenfahrzeuge GmbH, 80809 München (DE)
(72) Erfinder: RITTER, Hans, Jürgen, D-12589 Berlin (DE)
(86) Internationale Anmeldenummer: PCT/EP1999/007370
(87) Internationale Veröffentlichungsnummer: WO 2000/025038

(56) Entgegenhaltungen:
- EP-A- 0 141 428
- DE-A- 2 051 858
- DE-A- 2 456 002
- US-A- 2 576 658
- US-A- 3 795 291
- US-A- 4 576 086

## Beschreibung

Die vorliegende Erfindung betrifft einen Hochleistungsschwingungsdämpfer gemäß dem Oberbegriff des Anspruches 1. Solch ein Dämpfer ist aus US-A-2 576 658 bekannt.

Derartige Hochleistungsschwingungsdämpfer werden in Fahrzeugen zur Unterdrückung von Schwingungen der abgefederten Massen verwendet. Diese in der Regel hydraulischen Schwingungsdämpfer wandeln die Schwingungsenergie in Wärme um, wodurch die Schwingungen gedämpft bzw. beseitigt werden.

Das Wirkprinzip bekannter Bauweisen besteht darin, Öl zu verdrängen und durch Düsen oder Drosselventile zu pressen. Dabei erhitzt sich das Öl, wobei die entstehende Wärmeenergie über die Außenflächen an die Umgebung abgegeben wird. Bei großen Belastungen des Schwingungsdämpfers kann es hierbei jedoch zu starkem Viskositätsabfall oder gar zu einem Verschäumen des Öls kommen. Dadurch fallen die Dämpfkräfte deutlich ab und der Hochleistungsschwingungsdämpfer verliert ein wesentliches Maß an Leistungsfähigkeit.

Um dies zu verhindern, werden Schwingungsdämpfer häufig entsprechend groß gebaut oder mit Kühlrippen versehen. Derartige Bauweisen sind z. B. aus der DE 11 42 472, der US 3,795,291, der US 4,153,145 und der US 5,178,239 bekannt.

Darüberhinaus sind weitere Bauformen bekannt, bei denen das Öl im Kreislauf immer in eine Richtung fließt und das heiße Öl über einen zusätzlichen Ausgleichsbehälter gefördert wird, der als Kühler ausgebildet ist. Ein derartiger Schwingungsdämpfer ist z. B. aus der DE 24 56 002 A1 bekannt. Wird der Kolben bei dieser Schwingungsdämpferanordnung belastet, so verdrängt er das im Arbeitsraum befindliche Öl über ein Rückschlagventil in die separate Kühleinrichtung. Dort kann das Öl abkühlen, bevor es über eine Zuleitung und einen Ansaugkanal im Schwingungsdämpfer einem weiteren Rückschlagventil zugeführt wird, welches den Zutritt des Öls in den Arbeitsraum zuläßt, wenn dort ein Unterdruck bei einer Entspannung des Schwingungsdämpfers auftritt.

Diese Bauweise weist jedoch den Nachteil auf, daß sie insbesondere für die Kühleinrichtung einen großen Platzbedarf erfordert. Zudem ist sie konstruktiv aufwendig und sehr kostenintensiv.

Die DE-OS 20 51 858 offenbart einen hydraulischen Zweirohr-Teleskopschwingungsdämpfer, der insbesondere für Kraftfahrzeuge vorgesehen ist. Dieser Schwingungsdämpfer weist zwischen dem Schwingungsdämpfergehäuse und einem Rohr, in welchem ein doppelwirkend ausgebildeter Kolben bewegbar ist, zwei konzentrische Ringräume auf, wobei die Dämpfungsflüssigkeit im kalten Zustand in den inneren Ringraum und nach Erwärmung auf eine vorbestimmte Temperatur in den äußeren Ringraum gelangt. Damit soll die Bandbreite der möglichen Temperaturschwankungen der Dämpfungsflüssigkeit auf ein Minimum reduziert werden. Der äußere Ringraum ermöglicht hierbei einen Wärmeaustausch mit der Umgebung zur Kühlung der Dämpfungsflüssigkeit. Andererseits wird die kalte Dämpfungsflüssigkeit nur im inneren und vergleichsweise gut isolierten Ringraum geführt, so daß gute Voraussetzungen für eine rasche Erwärmung der Dämpfungsflüssigkeit auf normale Betriebstemperatur gegeben sind. Damit soll auch bei einem Dauerbetrieb eine in etwa gleichbleibende Temperatur der Dämpfungsflüssigkeit gewährleistet werden.

Der vorliegenden Erfindung liegt daher die Aufgabe zugrunde, einen Hochleistungsschwingungsdämpfer für Fahrzeuge bereitzustellen, der sich durch eine kompakte Bauweise und auch bei einem Aufschäumen des Öls durch hohe Zuverlässigkeit auszeichnet.

Diese Aufgabe wird durch einen Hochleistungsschwingungsdämpfer mit den Merkmalen des Anspruchs 1 gelöst.

Erfindungsgemäß wurde hierbei überraschend erkannt. daß der Freiraum zwischen dem Rohr und dem Schwingungsdämpfergehäuse nicht nur als Ausgleichsraum für das Fluid dienen kann, sondern bei geschickter konstruktiver Gestaltung auch als effiziente Kühleinrichtung für das Fluid nutzbar ist. Dadurch kann vorteilnarterweise auf eine zusätzliche, externe Einrichtung zum Kühlen des Fluids verzichtet werden. Die Baugröße des Hochleistungsschwingungsdämpfers verringert sich daher im Vergleich zum Stand der Technik wesentlich. Zudem vereinfacht sich auch die konstruktive Gestalt des Schwingungsdämpfers.

Von weiterem Vorteil ist hierbei, daß die Kühleinrichtung als eine mit dem Ansaugkanal nur über eine Drosseleinrichtung zusammenwirkende Kammer ausgebildet ist. Dadurch wird erreicht, daß im wesentlichen nur bereits abgekühltes und entschäumtes Fluid in den Ansaugkanal und damit zurück in die Arbeitsräume gelangt. Dadurch kann der Viskositätsabfall des Fluids auch bei starken Belastungen des Schwingungsdämpfers im wesentlichen vermieden werden, wodurch gute Dämpfungseigenschaften erzielbar sind.

Vorteilhaft ist ferner, daß zur Realisierung des erfindungsgemäßen Hochleistungsschwingungsdämpfers nur relativ wenige Bauelemente erforderlich sind, wodurch sich der Montageaufwand gegenüber dem Stand der Technik verringert und der Schwingungsdämpfer insgesamt kostengünstiger herstellbar ist.

Aufgrund seiner kompakten Bauweise ist der erfindungsgemäße Hochleistungsschwingungsdämpfer zudem wesentlich unempfindlicher gegenüber äußeren Einflüssen wie Stöße etc., wodurch eine hohe Zuverlässigkeit und Langlebigkeit erzielbar ist.

Vorteilhafte Weiterbildungen der Erfindung ergeben sich aus den Merkmalen der Unteransprüche.

Dadurch, daß die Kühleinrichtung eine Auschäumkühlkammer und zwei Kühlkammern aufweist, wobei die Ausschäumkühlkammer beiden Kühlkammern benachbart ist und mit diesen ebenfalls über jeweils eine Drosseleinrichtung zusammenwirkt, und wobei die Kühlkammern jeweils über eine Drosseleinrichtung mit einer Ansaugkühlkammer und dadurch mit dem Ansaugkanal zusammenwirken, wird eine noch wirksamere Abkühlung und Entschäumung des Fluids ermöglicht. Mit dieser Bauweise ergeben sich im Prinzip drei Behandlungsstufen für das Fluid zwischen dem Austritt aus dem Arbeitsraum und dem Wiedereintritt hierin. In der Ausschäuinkühlkammer wird dem Fluid die Möglichkeit gegeben auszuschäumen und so die für die Funktion des Hochleistungsschwingungsdämpfers erforderliche Viskosität im wesentlichen wiederherzustellen. Die nachgeschalteten Kühlkammern unterstützen dann die Abkühlung des Fluids im wesentlichen Maße, so daß das in den Ansaugkanal gelangende Fluid im wesentlichen in einem Zustand vorliegt, der eine zuverlässige und effektive Funktion des Hochleistungsschwingungsdämpfers ermöglicht.

Von weiterem Vorteil ist es, wenn die Drosseleinrichtung als Spalt zwischen den Kammern der Kühleinrichtung ausgebildet ist. Dadurch läßt sich diese Drosseleinrichtung auf konstruktiv sehr einfache Weise realisieren. Zudem zeichnet sie sich durch hohe Zuverlässigkeit und Unempfindlichkeit aus.

Wenn die Drosseleinrichtung derart ausgebildet ist, daß nur im wesentlichen schaumfreies Fluid übertreten kann, wird zuverlässig der Zutritt von verschäumtem Fluid von der Ausschäumkammer in die Kühlkammern, d. h. von der Kühleinrichtung in den Ansaugkanal, verhindert. Die Funktionalität des Hochleistungsschwingungsdämpfers kann daher in hohem Maße sichergestellt werden. Dabei kann durch ausreichende Dimensionierung der im Umlauf befindlichen Fluidmenge ferner sichergestellt werden, daß auch bei längeren hohen Belastungen immer ausreichend geeignetes Fluid zur Abdämpfung der Schwingungen zur Verfügung steht. Da somit im wesentlichen kein verschäumtes Fluid in eine Arbeitskammer gelangt, kann vorteilhafterweise ein gravierender Viskositätsabfall des Fluids in der Arbeitskammer vermieden werden.

Dadurch, daß im Ansaugbereich des Kolbens ein Ansaugventil ausgebildet ist, welches mit dem Ansaugkanal zusammenwirkt, jedoch von der Kühleinrichtung durch eine Wand getrennt ist, wird ein direkter Übertritt des aus dem Arbeitsraum herausgedrückten Fluids in das Ansaugventil der Arbeitskammer verhindert. Das erhitzte und eventuell verschäumte Fluid muß daher immer erst über die Kühleinrichtung in den Ansaugkanal strömen, bevor es wieder in die Arbeitskammer gelangen kann. Dadurch wird die Zuverlässigkeit des Hochleistungsschwingungsdämpfers auch bei hohen Belastungen weiter erhöht. Zudem kann dies auf konstruktiv einfache Weise realisiert werden, wodurch sich eine noch zuverlässigere und kostengünstigere Bauweise ergibt.

Von weiterem Vorteil ist es, wenn das Schwingungsdämpfergehäuse mit Kühlrippen ausgebildet ist. Dann kann die im Fluid entstandene Wärmeenergie noch zuverlässiger aus der Kühleinrichtung über das Schwingungsdämpfergehäuse an die Umgebung abgeführt werden. Die Funktionalität und Zuverlässigkeit des Hochleistungsschwingungsdämpfers erhöhen sich dadurch weiter.

Die Erfindung wird nachfolgend in Ausführungssbeispielen anhand der Figuren der Zeichnung näher erläutert. Es zeigt:
- Fig. 1: einen Längsschnitt durch den erfindungsgemäßen Hochleistungsschwingungs-dämpfer;
- Fig. 2: einen Querschnitt durch den erfindungsgemäßen Hochleistungsschwingungs-dämpfer gemäß der Linie A-A in Fig. 1; und
- Fig. 3: einen Querschnitt durch den erfindungsgemäßen Hochleistungsschwingungs-dämpfer gemäß der Linie B-B in Fig. 1.

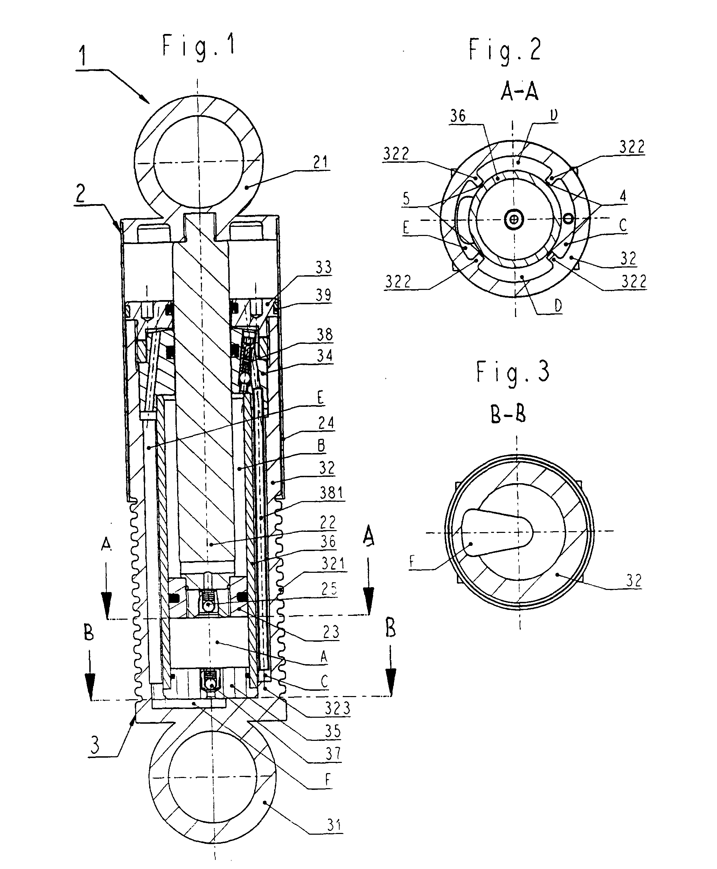

Gemäß der Darstellung in Fig. 1 weist ein Hochleistungsschwingungsdämpfer 1 eine Kolbeneinrichtung 2 und eine damit zusammenwirkende Zylindereinrichtung 3 auf.

Die Kolbeneinrichtung 2 ist über ein Befestigungsauge 21 mit einem hier nicht dargestellten abzufedernden Bauteil des Fahrzeugs verbunden. Eine Kolbenstange 22, welche einen Kolben 23 trägt, ist mit dem Befestigungsauge 21 über eine Verschraubung starr verbunden. Die Kolbeneinrichtung 2 weist ferner noch einen Schutzmantel 24 auf, der einen wesentlichen Teilbereich der Zylindereinrichtung 3 außen übergreift, um den Eintritt von Schmutz zu verhindern.

Die Zylindereinrichtung 3 ist über ein Befestigungsauge 31 mit einem weiteren, hier nicht dargestellten Bauteil des Fahrzeugs verbunden. An das Befestigungsauge 31 schließt sich einstückig ein Schwingungsdämpfergehäuse 32 an, welches sich in Richtung zum Befestigungsauge 21 der Kolbeneinrichtung 2 erstreckt. Der dem Befestigungsauge 31 gegenüberliegende Endbereich des Schwingungsdämpfergenauses 32 ist mit einer Abdeckung 33 versehen. Die Abdeckung 33 weist ein auf den Durchmesser der Kolbenstange 22 angepaßtes Durchgangsloch auf, so daß diese abgedichtet darin geführt werden kann. Weiter weist die Zylindereinrichtung 3 einen Gehäuseverschluß 34 auf, in welchem die Kolbenstange 22 abgedichtet geführt wird. Zwischen dem Gehäuseverschluß 34 und einem Bodenstück 35 der Zylindereinrichtung 3 erstreckt sich ein Rohr 36. In diesem Rohr 36 wird der Kolben 23 der Kolbeneinrichtung 2 abgedichtet geführt.

Der zweiseitig wirkende Kolben 23 bildet somit auf einer Seite zusammen mit dem Rohr 36, dem Bodenstück 35 und einem daran ausgebildeten Rückschlagventil 37 einen ersten Arbeitsraum A. Auf der anderen Seite des Kolbens 23 ergibt sich zusammen mit dem Rohr 36, dem Gehäuseverschluß 34 und einer darin ausgebildeten Düse 38 ein zweiter Arbeitsraum B. Die Arbeitsräume A und B sind mit Öl gefüllt.

Das Schwingungsdämpfergehäuse 32 ist zudem ferner noch mit Rippen 321 versehen, weiche als Kühlrippen dienen. Umfangsseitig an das Schwingungsdämpfergehäuse 32 angefügt ist zudem ein Filzring 39, der zusammen mit dem Schutzmantel 24 der Kolbeneinrichtung 2 eine zuverlässige Abdichtung gegenüber den Eintritt von Schmutz, etc. ermöglicht.

Wie am besten in der Schnittdarstellung gemäß Figur 2 ersichtlich ist, ist das Schwingungsdämpfergehäuse 32 derart ausgebildet, daß es im Zusammenwirken mit dem Rohr 36 vier umfangsseitig zum Rohr 36 angeordnete, separate Kammern ausbildet. Dadurch ergeben sich eine Ausschäumkühlkammer C, zwei Kühlkammern D und eine Ansaugkühlkammer E,-in welche das erwärmte Öl aus dem Arbeitsraum B verdrängt wird. Alle vier Kammern sind teilweise mit Öl gefüllt. Die darüber hinaus enthaltene Ausgleichsluft dient der Aufnahme des durch die Kolbenstange 22 verdrängten Öls.

Zwischen auf das Rohr 36 zuweisende Vorsprünge 322 des Schwingungsdämpfergehäuses 32 und dem Rohr 36 liegen hierbei jeweils als Drosseleinrichtung wirkende Spalte vor. So ist die Ausschäumkammer C mit den beiden benachbarten Kühlkammern D über jeweils einen ersten Spalt 4 verbunden. Der erste Spalt 4 ist so dimensioniert, daß nur im wesentlichen schaumfreies Öl aus der Ausschäumkammer C in die Kühlkammern D übertreten kann.

Zwischen den Kühlkammern D und der Ansaugkühlkammer E liegen als weitere Drosselstellen zweite Spalte 5 vor, die zusätzlich sicherstellen, daß kein verschäumtes Öl in die Ansaugkühlkammer E gelangen kann. Wie aus Fig. 1 ersichtlich ist, geht die Ansaugkühlkammer E im Bereich des Befestigungsauges 31 in einen Ansaugkanal F über, der mit dem Rückschlagventil 37 zusammenwirkt.

Das Schwingungsdämpfergehäuse 32 ist gemäß der Darstellungen in den Figuren 1 und 3 so ausgebildet, daß nur die Ansaugkühlkammer E mit dem Ansaugkanal F in Verbindung steht. Ein Übertritt von Öl direkt von der Ausschäumkammer C oder einer der Kühlkammern D in den Ansaugkanal F ist durch eine Wand 323 unterbunden.

Nachfolgend wird nun die Wirkungsweise des Hochleistungsschwingungsdämpfers 1 erläutert.

Der Kolben 23 mit der Kolbenstange 22 gleitet entsprechend der Fahrzeugschwingung abgedichtet im Rohr 36. Da im Kolben 23 ein Rückschlagventil 25 ausgebildet ist, kann das Öl nur über die Düse 38 aus dem Arbeitsraum B verdrängt werden. Beim Durchtritt durch die Düse 38 erwärmt sich das Öl, so daß die Schwingungsenergie des Schwingungsdämpfers 1 in Wärmeenergie umgewandelt wird, wodurch eine Dämpfwirkung erzielt wird.

Das aus dem Arbeitsraum B über die Düse 38 verdrängte Öl wird über ein Rohr 381 in den unteren Bereich der Ausschäumkühlkammer C geleitet. Das Rohr 381 verhindert das Verschäumen des heißen Öls mit der Ausgleichsluft der Ausschäumkühlkammer. Da das Bodenstück 35 zusammen mit der Wand 323 des Schwingungsdämpfergehäuses 32 einen Übertritt des erhitzten und eventuell verschäumten Öls in den Ansaugkanal F verhindern, kann dieses nur in die Kühlkammern D übertreten. Da der erste Spalt 4 zwischen diesen Kammern zudem jeweils derart bemessen ist, daß nur schaumfreies Öl übertreten kann, verbleibt das Öl in der Ausschäumkühlkammer C, bis es in flüssiger Form vorliegt. Über den zweiten Spalt 5 kann das im wesentlichen bereits ausgeschäumte OI aus den Kühlkammern D in die Ansaugkühlkammer E strömen. Dort kann eine weitere Abkühlung erfolgen, bis es im unteren Bereich der Ansaugkühlkammer E in den Ansaugkanal F übergeht.

Da eine Kompression des Arbeitsraumes B mit einer gleichzeitigen Expansion des Arbeitsraumes A verbunden ist, wird über das Rückschlagventil 37 zur gleichen Zeit abgekühltes Öl in den ersten Arbeitsraum A gesaugt, während Öl aus dem zweiten Arbeitsraum B herausgedrückt wird.

Bei einem Schwingungshub, der zu einer Expansion des zweiten Arbeitsraumes B bei gleichzeitiger Kompression des ersten Arbeitsraumes A führt, schließt das Rückschlagventil 37 selbsttätig und es wird Öl aus dem ersten Arbeitsraum A über das weitere Rückschlagventil 25 im Kolben 23 in den zweiten Arbeitsraum B übergeführt. Der Arbeitsraum B kann durch die Kolbenstange 22 bedingt nicht so viel Öl aufnehmen, wie aus dem Arbeitsraum A verdrängt wird. Das überschüssige Öl wird ebenfalls durch die Düse 38 verdrängt.

Jede Bewegung des Kolbens 23 bewirkt somit einen Zwangsumlauf des Öls über die Düse 38, die als Kühleinrichtung wirkenden Ausschäumkühlkammer C, Kühlkammern D und Ansaugkühlkammer E.

Somit wird die über die Befestigungsaugen 21 und 31 auf den Hochleistungsschwingungsdämpfer 1 eingeleitete Schwingungsbewegung durch die Relativbewegung der Kolbeneinrichtung 2 gegenüber der Zylindereinrichtung 3 und die dadurch bewirkte Verdrängung des Öls über eine Düse bzw. die damit verbundene Umwandlung der kinetischen Energie in Wärmeenergie wirksam gedämpft.

Die Erfindung läßt neben dem hier aufgezeigten Ausführungsbeispiel weitere Gestaltungsansätze zu.

So kann die Anzahl der einzelnen Kammern der Kühleinrichtung variiert werden. Z. B. können nur eine Kühlkammer oder auch mehrere Kühlkammern D vorgesehen sein. Ferner kann auch die Ausschäumkammer C in einzelne Bereiche unterteilt sein.

Anstelle von Öl kann auch ein anderes geeignetes Fluid verwendet werden, welches ebenfalls die Erzielung einer Dämpfwirkung ermöglicht.

Anstelle oder ergänzend zu den Kühlrippen 321 am Schwingungsdämpfergehäuse 32 könnte auch eine Fremdkühlung treten.

Der erfindungsgemäße Hochleistungsschwingungsdämpfer 1 kann für vielfältige Einsatzzwecke angewendet werden und eignet sich insbesondere für Fahrzeuge, z. B. Maschinen- und Nutzfahrzeuge.

Die Erfindung schafft somit einen Hochleistungsschwingungsdämpfer 1 für Fahrzeuge mit einem Kolben 23, der in einem Rohr 36 eines Schwingungsdämpfergehäuses 32 gleitend abgedichtet bewegbar ist, wobei der Kolben 23 mit Fluidumlaufzwang auf ein Fluid in Arbeitsräumen A bzw. B einwirkt und dieses zur Dämpfung eines Stoßes derart über eine Düseneinrichtung 38 verdrängt, daß die Schwingungsenergie in Wärme umgesetzt wird. Erfindungsgemäß wird das so erhitzte Fluid in eine im Hochleistungsschwingungsdämpfer 1 integrierte Kühleinrichtung geführt. Diese Kühleinrichtung kann eine Ausschäumkühlkammer C aufweisen, in welcher eventuell verschäumtes Öl ausschäumen kann. Über Kühlkammern D, welche mit der Ausschäumkühlkammer C über eine Drosseleinrichtung 4 verbunden sind, kann das schaumfreie Öl in eine Ansaugkühlkammer E und schließlich in einen Ansaugkanal F geführt werden. Von dort gelangt es dann in einen Arbeitsraum A des Schwingungsdämpfers 1. Der erfindungsgemäße Hochleistungsschwingungsdämpfer 1 vermeidet somit in zuverlässiger Weise den Eintritt von verschäumtem Öl in einen Arbeitsraum A bzw. B, wodurch ein Funktionalitätsverlust aufgrund der geringen Viskosität des Ölschaumes wirksam verhindert werden kann. Zudem zeichnet sich der Hochleistungsschwingungsdämpfer 1 durch eine sehr kompakte und konstruktiv einfache Bauweise aus.

## Patentansprüche

1. Hochleistungsschwingungsdämpfer (1) für Fahrzeuge, mit einem doppelwirkend ausgebildeten Kolben (23), der in einem Rohr (36) eines Schwingungsdämpfergehäuses (32) gleitend abgedichtet bewegbar ist, wobei der Kolben (23) mit Fluidumlaufzwang auf ein Fluid in Arbeitsräumen (A, B) einwirkt und dieses zur Dämpfung eines Stoßes derart über eine Düseneinrichtung (38) verdrängt, daß die Schwingungsenergie in Wärme umgesetzt wird, was evtl. zu einer Verschäumung des Fluids führt, wobei der Hochleistungsschwingungsdämpfer (1) ferner eine Kühleinrichtung (C, D, E) aufweist, der verdrängtes Fluid zugeführt wird, und wobei abgekühltes Fluid über einen im Schwingungsdämpfergehäuse (32) ausgebildeten Ansaugkanal (F) aus der Kühleinrichtung (C, D, E) entnommen und den Arbeitsräumen (A, B) zugeführt wird,
**dadurch gekennzeichnet,**
**daß** die Kühleinrichtung (C, D, E) im Hochleistungsschwingungsdämpfer (1) ausgebildet ist und in Gestalt von wenigstens zwei Kammern zwischen dem Schwingungsdämpfergehäuse (32) und dem Rohr (36) vorliegt, die mit dem Ansaugkanal (F) über zumindest eine Drosseleinrichtung (4, 5) zusammenwirken.

2. Hochleistungsschwingungsdämpfer nach Anspruch 1, **dadurch gekennzeichnet, daß** die wenigstens zwei Kammern der Kühleinrichtung (C, D, E) umfangsseitig benachbart zwischen dem Schwingungsdämpfergehäuse (32) und dem Rohr (36) angeordnet sind.

3. Hochleistungsschwingungsdämpfer nach Anspruch 1 oder 2, **dadurch gekennzeichnet, daß** die Kühleinrichtung eine Ausschäumkammer (C) und zwei Kühlkammern (D) aufweist, wobei die Ausschäumkammer (C) beiden Kühlkammern (D) benachbart ist und mit diesen ebenfalls über jeweils eine Drosseleinrichtung (4) zusammenwirkt, und wobei die Kühlkammern (D) jeweils über die Drosseleinrichtung (5) mit einer Ansaugkühlkammer (E) und dadurch mit dem Ansaugkanal (F) zusammenwirken.

4. Hochleistungsschwingungsdämpfer nach einem der Ansprüche 1 bis 3, **dadurch gekennzeichnet, daß** die wenigstens eine Drosseleinrichtung (4, 5) als Spalt zwischen den Kammern (C, D, E) der Kühleinrichtung ausgebildet ist.

5. Hochleistungsschwingungsdämpfer nach einem der Ansprüche 1 bis 4, **dadurch gekennzeichnet, daß** die wenigstens eine Drosseleinrichtung (4, 5) derart dimensioniert ist, daß nur im wesentlichen schaumfreies Fluid übertreten kann.

6. Hochleistungsschwingungsdämpfer nach einem der Ansprüche 1 bis 5, **dadurch gekennzeichnet, daß** im Ansaugbereich des Kolbens (23) ein Ansaugventil (37) ausgebildet ist, welches mit dem Ansaugkanal (F) zusammenwirkt, jedoch von der Kühleinrichtung (C, D, E) durch eine Wand (323) getrennt ist.

7. Hochleistungsschwingungsdämpfer nach einem der Ansprüche 1 bis 6, **dadurch gekennzeichnet, daß** das Schwingungsdämpfergehäuse (32) mit Kühlrippen (321) ausgebildet ist.

## Claims

1. High-performance vibration damper (1) for vehicles, comprising a piston (23) configured for double action, which is mobile for sliding sealed movement in a tube (36) of a vibration damper housing (32), with said piston (23) acting upon a fluid with forced fluid circulation in operating spaces (A, B) and displacing the fluid for dampening an impact via a nozzle means (38) in such a way that the vibration energy is converted into thermal energy, which results possibly in foaming of said fluid, wherein the high-performance vibration damper (1) comprises moreover a cooling means (C, D, E) to which the displaced fluid is returned, and wherein some cooled fluid is removed from said cooling means (C, D, E) via a suction passage (F) formed in said vibration damper housing (32) and is supplied to said operating spaces (A, B),
**characterised in**
**that** said cooling means (C, D, E) is formed in the high-performance vibration damper (1) and is present in the form of at least two chambers between said vibration damper housing (32) and said tube (36), which cooperate with said suction passage (F) via at least one throttle means (4, 5).

2. High-performance vibration damper according to Claim 1, **characterised in that** said at least two chambers of said cooling means (C, D, E) are disposed between said vibration damper housing (32) and said tube (36) in an adjacent position on the peripheral side.

3. High-performance vibration damper according to Claim 1 or 2, **characterised in that** said cooling means comprises a foaming chamber (C) and two cooling chambers (D), with said foaming chamber (C) being adjacent to both cooling chambers (D) and cooperating with them equally via a respective throttle means (4), wherein each of said cooling chambers (D) cooperates via said throttle means (5) with a suction cooling chamber (E) and hence with said suction passage (F).

4. High-performance vibration damper according to any of the Claims 1 to 3, **characterised in that** said at least one throttle means (4, 5) is configured as gap between said chambers (C, D, E) of said cooling means.

5. High-performance vibration damper according to any of the Claims 1 to 4, **characterised in that** said at least one throttle means (4, 5) is dimensioned in such a way that only some fluid substantially free of foam can be transferred.

6. High-performance vibration damper according to any of the Claims 1 to 5, **characterised in that** a suction valve (37) is formed in the suction zone of said piston (23), which cooperates with said suction passage (F) but is separated from said cooling means (C, D, E) by a wall (323).

7. High-performance vibration damper according to any of the Claims 1 to 6, **characterised in that** cooling fins (321) are formed on said vibration damper housing (32).

## Revendications

1. Amortisseur de vibrations de grande puissance (1 ) pour véhicules, comprenant un piston (23) pour un double effet, qui est mobile pour un mouvement glissant étanche dans un conduit (36) d'un carter d'amortisseur de vibrations (32), ledit piston (23) agissant sur un fluide par circulation forcée dans des espaces de travail (A, B) et déplaçant le fluide afin d'amortir un coup via un moyen de tuyère (38) d'une telle manière, que l'énergie vibratoire soit convertie en énergie thermique, ce qui mène éventuellement au moussage dudit fluide, dans lequel l'amortisseur de vibrations de grande puissance (1) comprend au plus un moyen de refroidissement (C, D, E) auquel retourne le fluide chassé, et dans lequel du fluide refroidi est sorti dudit moyen de refroidissement (C, D, E) via un passage d'aspiration (F) formé dans ledit carter d'amortisseur de vibrations (32) et est alimenté auxdites espaces de travail (A, B),
**caractérisé en ce**
**que** ledit moyen de refroidissement (C, D, E) est formé dans l'amortisseur de vibrations de grande puissance (1) et est présent sous forme d'au moins deux chambres entre ledit carter d'amortisseur de vibrations (32) et ledit conduit (36), qui coopèrent avec ledit passage d'aspiration (F) via au moins un moyen étrangleur (4, 5).

2. Amortisseur de vibrations de grande puissance selon la revendication 1, **caractérisé en ce que** lesdites au moins deux chambres dudit moyen de refroidissement (C, D, E) sont disposées entre ledit carter d'amortisseur de vibrations (32) et ledit conduit (36) en une position adjacente du côté périphérique.

3. Amortisseur de vibrations de grande puissance selon la revendication 1 ou 2, **caractérisé en ce que** ledit moyen de refroidissement comprend une chambre de moussage (C) et deux chambres de refroidissement (D), à ladite chambre de moussage (C) étant adjacente aux deux chambres de refroidissement (D) et coopérant avec les dernière également via un moyen étrangleur respectif (4), dans lequel chacune desdites chambres de refroidissement (D) coopère via ledit moyen étrangleur (5) avec une chambre de refroidissement à aspiration (E) et ainsi avec ledit passage d'aspiration (F).

4. Amortisseur de vibrations de grande puissance selon une quelconque des revendications 1 à 3, **caractérisé en ce que** ledit au moins un moyen étrangleur (4, 5) est configuré sous forme de fente entre lesdites chambres (C, D, E) dudit moyen de refroidissement.

5. Amortisseur de vibrations de grande puissance selon une quelconque des revendications 1 à 4, **caractérisé en ce que** ledit au moins un moyen étrangleur (4, 5) est dimensionné d'une telle manière, que seulement du fluide essentiellement sans mousse puisse être transféré.

6. Amortisseur de vibrations de grande puissance selon une quelconque des revendications 1 à 5, **caractérisé en ce qu'**une soupape d'aspiration (37) est formée dans la zone d'aspiration dudit piston (23), qui coopère avec ledit passage d'aspiration (F) mais est séparé dudit moyen de refroidissement (C, D, E) par une paroi (323).

7. Amortisseur de vibrations de grande puissance selon une quelconque des revendications 1 à 6, **caractérisé en ce que** des ailettes de refroidissement (321) sont formées sur ledit carter d'amortisseur de vibrations (32).
